# EUROPEAN PATENT SPECIFICATION

(11) **EP 0 826 452 B1**
(45) Date of publication and mention of the grant of the patent: **17.04.2002**
(21) Application number: 97111303.0
(22) Date of filing: 04.07.1997
(51) Int. Cl.: B23B 29/32, F16H 33/06

(54) **Turret with device for compensation of torque fluctuations**
Werkzeugrevolver mit Vorrichtung zum Ausgleich von Momentschwankungen
Tourelle avec dispositif pour compensation des variations de couple

(30) Priority: 28.08.1996 JP 22697196
(43) Date of publication of application: 04.03.1998
(73) Proprietor: SANKYO SEISAKUSHO CO., Tokyo (JP)
(72) Inventor: Kato, Heizaburo, Ogasa-gun, Shizuoka-ken (JP)
(74) Representative: Weisert, Annekäte, Dipl.-Ing. Dr.-Ing.

(56) References cited:
- EP-A- 0 513 735
- EP-A- 0 800 021
- US-A- 5 544 577

## Description

This invention relates to an apparatus for indexing cutters (or tools) of a machine tool such as a turret lathe, in which a plurality of cutters required for machining a workpiece are beforehand attached to a rotary tool holder, and when machining the workpiece, the rotary tool holder is suitably rotated to bring the cutter necessary for the machining into a workpiece machining position, thereby machining the workpiece.

A cutter indexing apparatus comprising the features of the preamble of claim 1 is known from EP-A-513 735.

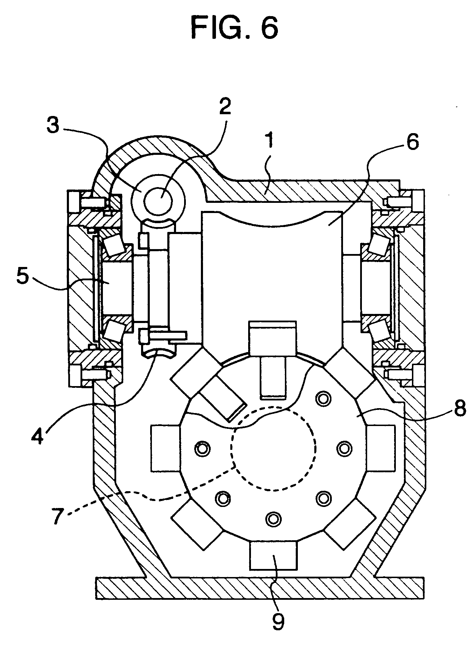

For example, Japanese Utility Model Examined Publication No. 5-6005 discloses a conventional cutter indexing apparatus of the type described in which an intermittent indexing mechanism for locating cutters of a rotary tool holder in a machining position comprises a combination of a globoidal cam and a turret. Fig. 6 shows an example thereof. Within a housing 1, a worm gear 3, fixedly mounted on an input shaft 2, is in mesh with a worm wheel 4, and a globoidal cam 6 is fixedly mounted on an intermediate shaft 5 on which the worm wheel 4 is fixedly mounted. A turret 8 is fixedly mounted on an output shaft 7 disposed perpendicular to the intermediate shaft 5, and cam followers 9 are rotatably mounted on an outer peripheral portion of the turret 8, and are engaged with a cam surface of the globoidal cam 6. A rotary tool holder is fixedly mounted on the output shaft 7, and when the input shaft 2 is rotated, the globoidal cam 6 is rotated through the worm gear 3, the worm wheel 4 and the intermediate shaft 5, and the turret 8 is rotated a predetermined angle through the cam followers 9, and this rotation is transmitted to the rotary tool holder through the output shaft 7.

Generally, an indexing operation for a rotary tool holder is completed by one motion or several motions, and therefore it is necessary that a control motor for rotating an input shaft can be rapidly started or activated from a stop condition, and then can be rapidly stopped after the indexing operation. Recently, however, the cutter indexing apparatuses have now be required to achieve a high-speed indexing for the purpose of reducing a cutting time, and some of these cutter indexing apparatuses are capable of effecting the indexing operation within 0.1 second. In such a cutter indexing apparatus, the rotational speed of the input shaft becomes as high as 600 rpm, and considering this in connection with the control motor, the indexing operation, in which the input shaft is rotated into a speed of 600 rpm from a stop condition, and then is abruptly stopped, must be completed in 0.1 second, and during this time period, a very large inertia force acts on the input shaft, and this causes an uneven rotation of the input shaft.

The rotary tool holder is indexed in accordance with a cam curve of the globoidal cam fixedly mounted on the intermediate shaft, and this cam curve is so determined that the rotary tool holder smoothly begins to rotate, and then is slowly stopped after the indexing. Actually, however, the rotary tool holder can not smoothly begin to rotate even at the point of time when this rotation should be started, and as a result the indexing operation is completed within the short indexing time, and therefore the rotary tool holder must be rapidly stopped. At this time, residual vibrations are produced, and exert adverse effects on the whole of the machine tool.

In such a cutter indexing apparatus, in order to increase the rigidity of the cutters during a cutting operation, there is a tendency for the rotary tool holder, the output shaft (on which the rotary tool holder is mounted), the turret, the cam followers and the globoidal cam (indexing cam) to increase in size. When these parts are increased in size, an inertia force, produced during the indexing rotation, increases, so that the large inertia force acts on the input shaft of the cutter indexing apparatus. Therefore, the indexing rotational speed is lowered if the same motor is used to rotate the input shaft, and in order to obtain the same indexing rotational speed, the capacity of the motor for rotating the input shaft must be increased.

A countermeasure particularly effective for achieving the high-speed design of the cutter indexing apparatus is to reduce the weights of the above-mentioned parts. However, in view of the rigidity, it is not possible to achieve a sufficiently-lightweight design, and therefore the problem still remains unsolved that the influence of the inertia force, which prevents the high-speed design, can not be eliminated.

### SUMMARY OF THE INVENTION

With the above problems in view, it is an object of this invention to provide a cutter indexing apparatus capable of effecting a high-speed indexing operation with high accuracy. The above problem is solved by means of an apparatus comprising the features of claim 1.

In the present invention, in order to achieve the above object, a fluctuation torque cancellation apparatus is mounted on a cutter indexing apparatus in order to absorb a fluctuation torque developing on an input shaft, and with this arrangement, the fluctuation toque, produced on the input shaft, can be absorbed almost completely. Therefore, the uneven rotation of the input shaft due to the inertia force, as experienced in the conventional construction, will not occur, and an output shaft can begin to rotate smoothly, and will not stop abruptly, and therefore the high-speed indexing can be effected with high precision.

The fluctuation torque cancellation apparatus, mounted on the cutter indexing apparatus of the present invention, comprises a torque compensation cam mounted on the input shaft of the cutter indexing apparatus, a cam follower held in rolling contact with a cam surface of this cam, a slider rotatably supporting the cam follower, a tubular slide guide which has a closed bottom, and slidably receives the slider therein, and a spring member (which is received in the slide guide to urge the slider) and/or means for supplying the air into the slide guide. A cam curve of the cam is so determined that when the fluctuation torque, acting on the input shaft, is large, a large compensation torque can be produced by the spring member and/or the air, and with this arrangement the fluctuation torque, developing on the input shaft, can be canceled almost completely, and the uneven rotation of the input shaft can be suppressed, and the output shaft can begin to rotate smoothly, and can stop smoothly.

### BRIEF DESCRIPTION OF THE DRAWINGS

Fig. 1 is a front-elevational view of a turret lathe provided with a cutter indexing apparatus of the present invention;
Fig. 2 is a side-elevational view of the turret lathe;
Fig. 3 is an enlarged, front-elevational view of the cutter indexing apparatus having a fluctuation torque cancellation apparatus of the invention;
Fig. 4A is a side-elevational view showing a spring member of the fluctuation torque cancellation apparatus of the invention in its fully-compressed condition;
Fig. 4B is a side-elevational view showing the spring member of the fluctuation torque cancellation apparatus of the invention in its fully-expanded condition;
Fig. 5 is a characteristic diagram showing the relation between a fluctuation torque and a cancellation torque in the fluctuation torque cancellation apparatus of the invention; and
Fig. 6 is a cross-sectional view showing the construction of a conventional cutter indexing apparatus.

### DESCRIPTION OF THE PREFERRED EMBODIMENTS

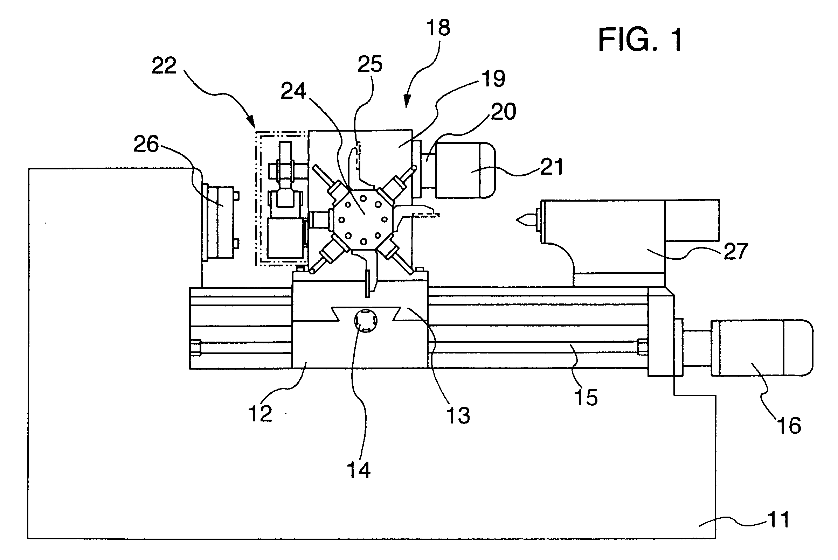

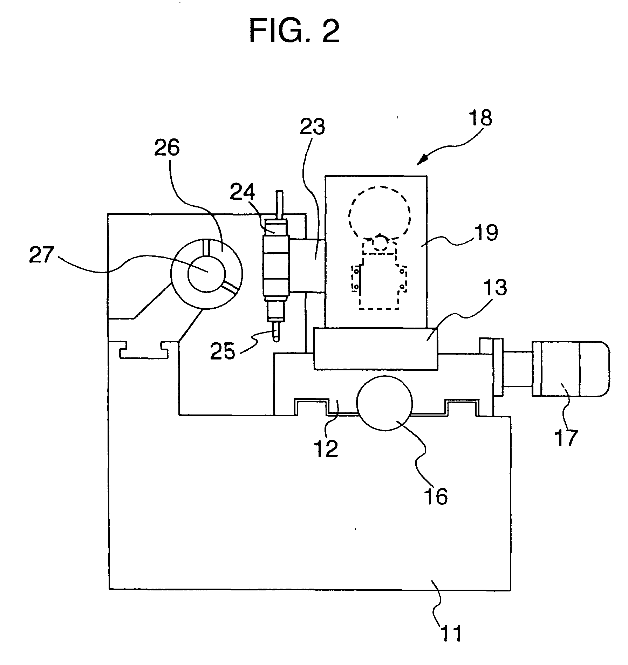

A preferred embodiment of the present invention will now be described. Fig. 1 is a front-elevational view of a turret lathe provided with one preferred embodiment of a cutter indexing apparatus of the invention, and Fig. 2 is a side-elevational view of the turret lathe. In Figs. 1 and 2, a moving table 12, which is horizontally movable right and left, is mounted on a bed 11, and a moving table 13, which is horizontally movable forward and backward, is mounted on the moving table 12. The moving table 12 is driven by a movement control motor 16 through a feed screw mechanism 14, and the moving table 13 is driven by a movement control motor 17 through a feed screw mechanism 15. A housing 19 of the cutter indexing apparatus 18 is fixedly mounted on the moving table 13, and a rotation control motor 21 and a fluctuation torque cancellation apparatus 22, both of which are connected to an input shaft 20, are fixedly mounted on an outer surface of the housing 19, and a rotary tool holder 24 is fixedly mounted on an output shaft 23. A plurality of different cutters 25 are releasably attached to an outer peripheral portion of the rotary tool holder 24. Reference numeral 26 denotes a workpiece holding chuck, and reference numeral 27 denotes a center.

A workpiece is held by a chuck 26, and is rotated by a motor (not shown). For machining the workpiece, the movement control motors 16 and 17 are rotated by control signals from a control portion (not shown) to move the moving tables 12 and 13 respectively to predetermined positions, and also the rotary tool holder 24 is rotated by the rotation control motor 21 to select the necessary cutter 25.

### First Embodiment

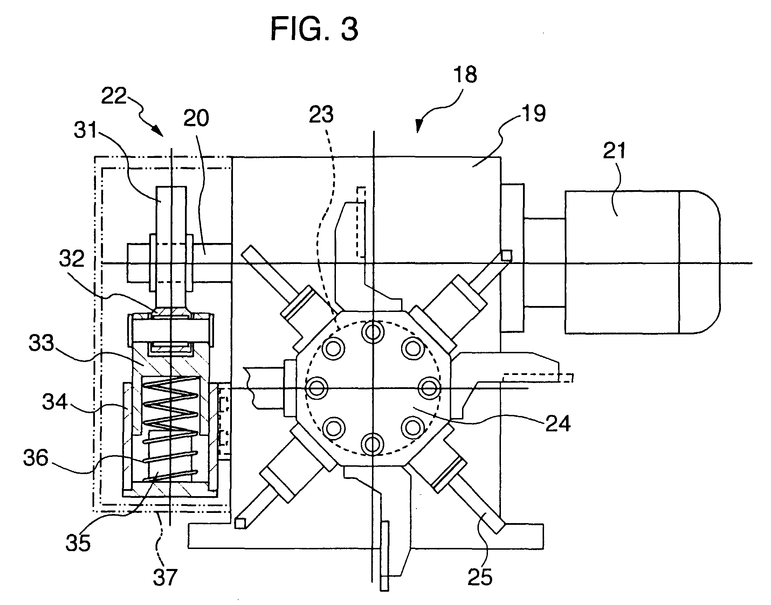

Next, a first embodiment of a fluctuation torque cancellation apparatus 22 will be described. Fig. 3 is an enlarged, front-elevational view of the cutter indexing apparatus 18 provided with the fluctuation torque cancellation apparatus 22. The fluctuation torque cancellation apparatus 18 comprises a torque compensation cam 31 fixedly mounted on the input shaft 20 of the cutter indexing apparatus 18, and a cam follower 32 is engaged with a cam surface formed on an outer peripheral edge of the torque compensation cam 31. The cam follower 32 is rotatably supported on a distal end portion of a slider 33, and the slider 33 is slidably received in a tubular slide guide 34 with a closed bottom. The slide guide 34 is fixedly secured to a side surface of the housing 19 by bolts, and a spring guide 35 extends from an inner bottom surface of the slide guide 34, and a coil spring member 36 is wound on the spring guide 35. The slide guide 34 may have a polygonal, tubular shape with a closed bottom or a hollow, cylindrical shape with a closed bottom. The whole of the fluctuation torque cancellation apparatus 22 is covered with a cover 37. There may be used an arrangement in which a sleeve is provided between the slider 33 and the slide guide 34, and this sleeve is threadedly connected to the slide guide 34 so that a spring force of the spring member 36 can be adjusted.

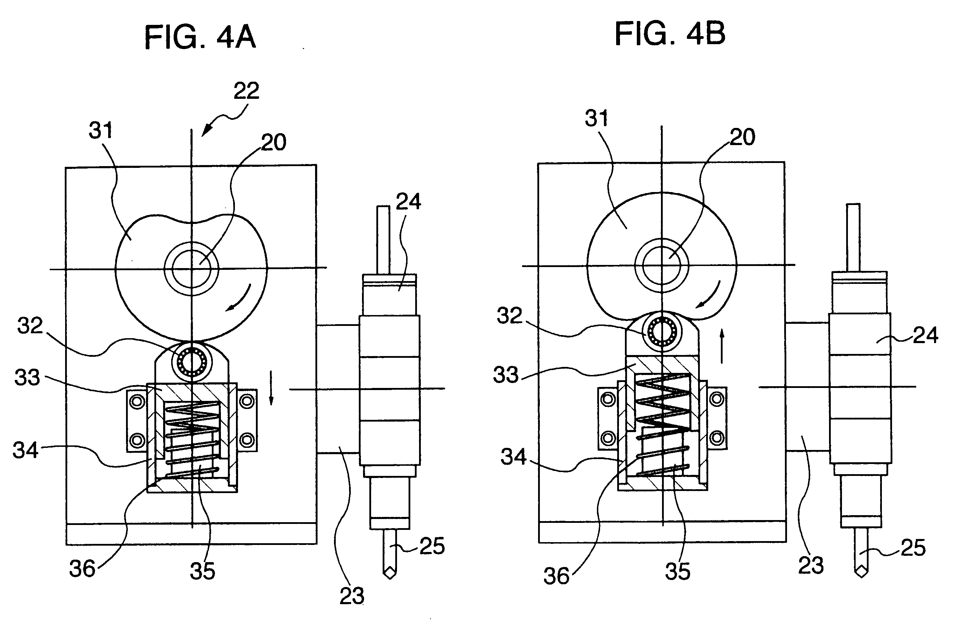

Next, the operation of this fluctuation torque cancellation apparatus will be described. When the input shaft 20 is rotated by the rotation control motor 21, the torque compensation cam 31, fixedly mounted on the input shaft 20, is continuously rotated, and the cam surface, formed on the outer peripheral surface of the torque compensation cam 31, reciprocally moves the slider 33 while rotating the cam follower 32, as shown in Fig. 4. Therefore, the spring member 36, provided within the slide guide 34, is compressed and expanded, and a pressing force of the cam follower 32 against the toque compensation cam 31 is changed, thereby canceling a fluctuation torque developing on the input shaft 20. Namely, when the fluctuation torque, acting on the input shaft 20, is large, the spring member 36 is compressed to increase the compensation torque, and when the fluctuation torque is small, the spring member 36 is expanded to decrease the compensation torque. By doing so, the fluctuation torque, developing on the input shaft 20, can be canceled almost completely, and the uneven rotation of the input shaft 20 can be suppressed, and also the rotation and stop of the output shaft 23 can be effected smoothly.

### Second Embodiment

In a modified fluctuation torque cancellation apparatus, instead of using the spring guide 35 and the spring member 36 provided within the slide guide 34 of Fig. 3, a seal member is provided between a slider 33 and a slide guide 34 to seal the interior of the slider 33 and the slide guide 34, and an air supply port is formed through a bottom wall of the slide guide 34, and air supply means, having a pressure control device, is connected to this air supply port. In this construction, an air pressure is used instead of the spring force produced by the spring member 36 of the first embodiment, and as in the first embodiment, when the input shaft 20 is rotated by the rotation control motor 21, the torque compensation cam 31, fixedly mounted on the input shaft 20, is continuously rotated, and the cam surface of the cam 31 reciprocally moves the slider 33 while rotating the cam follower 32. Therefore, the air within the slide guide 34 is compressed and expanded, and a pressing force of the cam follower 32 against the toque compensation cam 31 is changed, thereby canceling a fluctuation torque developing on the input shaft 20.

### Third Embodiment

In another modified fluctuation torque cancellation apparatus, the structures of the first and second embodiments are suitably combined together. For example, in Fig. 3, a piston is slidably received in a slide guide 34, and a spring member 36 is provided between this piston and a slider 33, and the air is supplied to a space (serving as an air chamber) between the piston and the slide guide 34. The space, receiving the spring member 36, may be separate from the air chamber, or may be the same as the air chamber. There can be provided means for adjusting the spring force of the spring member 36, and with this construction the initial spring force of the spring member 36 can be adjusted, and also the range of the compensation torque value between its minimum and maximum values can be widened. In this embodiment, normally, the compensation torque is exerted on the input shaft through the torque compensation cam, using only the pressing force by the spring member, and when it is desired to vary the torque compensation value, the pressing force by the air is added, thereby applying the compensation torque to the input shaft using both of the spring pressure and the air pressure.

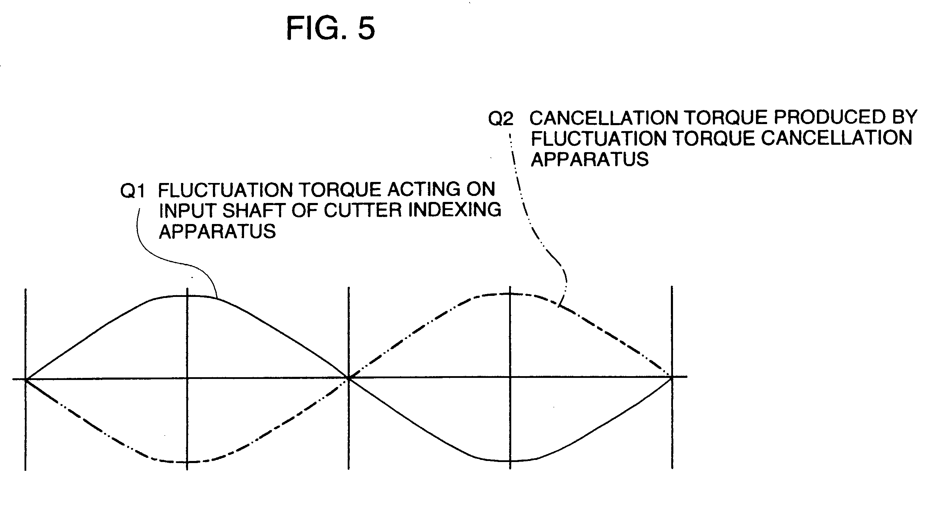

With respect to the magnitude of the compensation torque, the constructions of the relevant parts are so determined that the sum of a fluctuation torque Q1, applied to the input shaft 20, and a fluctuation torque Q2, applied to the input shaft 20 when reciprocally moving the slider 33 through the torque compensation cam 31 of the fluctuation torque cancellation apparatus 22, is always zero, as shown in Fig. 5.

As is clear from the above embodiments, in the present invention, the fluctuation torque cancellation apparatus is mounted on the cutter indexing apparatus in order to absorb the fluctuation torque developing on the input shaft, and with this construction, the fluctuation toque, produced on the input shaft, can be absorbed almost completely. Therefore, the uneven rotation of the input shaft due to the inertia force, as experienced in the conventional construction, will not occur, and the output shaft can begin to rotate smoothly, and will not stop abruptly, and therefore the high-speed indexing can be effected with high precision.

## Claims

1. A cutter indexing apparatus for a machine tool wherein a plurality of cutters (25) required for machining a workpiece are beforehand attached to a rotary tool holder (24), and when machining the workpiece, the rotary tool holder is suitably rotated to bring the cutter necessary for the machining into a workpiece machining position, thereby machining the workpiece; **characterized in that**
a fluctuation torque cancellation apparatus (22) for canceling a fluctuation torque developing on an input shaft (20) of said cutter indexing apparatus is mounted on said input shaft (20).

2. Apparatus according to claim 1, in which said fluctuation torque cancellation apparatus comprises a torque compensation cam (31) mounted on said input shaft (20) of said cutter indexing apparatus, a cam follower (32) held in rolling contact with a cam surface of said cam (31), a slider (33) rotatably supporting said cam follower (32), a tubular slide guide (34) which has a closed bottom, and slidably receives said slider (33) therein, and a spring member (35) received in said slide guide (34) to urge said slider (33).

3. Apparatus according to claim 1, in which said fluctuation torque cancellation apparatus (22) comprises a torque compensation cam (31) mounted on said input shaft (20) of said cutter indexing apparatus, a cam follower (32) held in rolling contact with a cam surface of said cam (31), a slider (33) rotatably supporting said cam follower, a tubular slide guide (34) which has a closed bottom, and slidably receives said slider (33) therein, and means for supplying air into said slide guide.

4. Apparatus according to claim 1, in which said fluctuation torque cancellation apparatus (22) comprises a torque compensation cam (31) mounted on said input shaft (20) of said cutter indexing apparatus, a cam follower (32) held in rolling contact with a cam surface of said cam (31), a slider (33) rotatably supporting said cam follower (32), a tubular slide guide (34) which has a closed bottom, and slidably receives said slider (33) therein, a spring member (35) received in said slide guide (34) to urge said slider (33), and means for supplying air into said slide guide.

## Patentansprüche

1. Schneidevorrichtungs-Schaltvorrichtung für ein Bearbeitungswerkzeug, bei dem mehrere für eine Bearbeitung eines Werkstücks erforderliche Schneidevorrichtungen (25) im voraus an einer rotierenden Werkzeughalterung (24) angebracht sind und beim Bearbeiten des Werkstücks die rotierende Werkzeughalterung passend gedreht wird, um die für die Bearbeitung notwendige Schneidevorrichtung in eine Werkstück-Bearbeitungsposition zu bringen, um dadurch das Werkstück zu bearbeiten,
**dadurch gekennzeichnet,**
**dass** eine Schwankungsmoment-Ausgleichsvorrichtung (22) zum Ausgleichen eines sich an einer Antriebswelle (20) der Schneidevorrichtungs-Schaltvorrichtung entwickelndes Schwankungsmoment an der Antriebswelle (20) befestigt ist.

2. Vorrichtung nach Anspruch 1, bei der die Schwankungsmoment-Ausgleichsvorrichtung einen Drehmoment-Ausgleichsnocken (31), der an der Antriebswelle (20) der Schneidevorrichtungs-Schaltvorrichtung befestigt ist, einen in Rollkontakt mit einer Nockenfläche des Nockens (31) gehaltenen Nockenstößel (32), einen den Nockenstößel (32) drehbar haltenden Schieber (33), eine röhrenförmige Gleitführung (34), die einen geschlossenen Boden aufweist und den Schieber (33) darin verschiebbar aufnimmt, und ein Federelement (36) das in der Gleitführung (34) aufgenommen ist, um auf den Schieber (33) zu wirken, aufweist.

3. Vorrichtung nach Anspruch 1, bei der die Schwankungsmoment-Ausgleichsvorrichtung (22) einen an der Antriebswelle (20) der Schneidevorrichtungs-Schaltvorrichtung befestigten Drehmoment-Ausgleichsnocken (31), einen in Rollkontakt mit einer Nockenfläche des Nockens (31) gehaltenen Nockenstößel (32), einen den Nockenstößel drehbar haltenden Schieber (33), eine röhrenförmige Gleitführung (34), welche einen geschlossenen Boden besitzt und den Schieber (33) verschiebbar darin aufnimmt, und eine Vorrichtung zum Zuführen von Luft in die Gleitführung aufweist.

4. Vorrichtung nach Anspruch 1, bei der die Schwankungsmoment-Ausgleichsvorrichtung (22) einen an der Antriebswelle (20) der Schneidevorrichtungs-Schaltvorrichtung befestigten Drehmoment-Ausgleichsnocken (31), einen in Rollkontakt mit einer Nockenfläche des Nockens (31) gehaltenen Nockenstößel (32), einen den Nockenstößel (32) drehbar haltenden Schieber (33), eine röhrenförmige Gleitführung (34), welche einen geschlossenen Boden aufweist und den Schieber (33) verschiebbar darin aufnimmt, ein in der Gleitführung (34) aufgenommenes Federelement (36), um auf den Schieber (33) zu wirken, und eine Vorrichtung zum Zuführen von Luft in die Gleitführung aufweist.

## Revendications

1. Appareil de positionnement repéré d'organes de coupe destiné à une machine-outil, dans lequel plusieurs organes de coupe (25) nécessaires pour l'usinage d'une pièce sont fixés au préalable à un porte-outils rotatifs (24) et, lors de l'usinage de la pièce, le porte-outils rotatif est tourné de façon convenable pour que l'organe de coupe nécessaire à l'usinage soit placé en position d'usinage de la pièce et permette ainsi l'usinage de la pièce, **caractérisé en ce que**,
un appareil (22) d'annulation d'un couple de fluctuation destiné à compenser un couple de fluctuation créé dans un arbre d'entrée (20) de l'appareil de positionnement repéré d'organe de coupe est monté sur l'arbre d'entrée (20).

2. Appareil selon la revendication 1, dans lequel l'appareil de compensation de couple de fluctuation comprend une came (31) de compensation de couple montée sur l'arbre d'entrée (20) de l'appareil de positionnement repéré d'organe de coupe, un toucheau (32) de came maintenu en contact roulant avec une surface de la came (31), un coulisseau (33) supportant le toucheau de came (32) afin qu'il tourne, un guide tubulaire coulissant (34) ayant un fond fermé et qui loge de manière coulissante le coulisseau (33), et un organe à ressort (35) logé dans le guide coulissant (34) afin qu'il repousse le coulisseau (33).

3. Appareil selon la revendication 1, dans lequel l'appareil (22) de compensation du couple de fluctuation comprend une came (31) de compensation de couple montée sur l'arbre d'entrée (20) de l'appareil de positionnement repéré d'organe de coupe, un toucheau de came (32) maintenu en contact roulant avec une surface de la came (31), un coulisseau (33) supportant le toucheau de came afin qu'il tourne, un guide tubulaire coulissant (34) qui a fond fermé et qui loge de manière coulissante le coulisseau (33), et un dispositif destiné à transmettre de l'air dans le guide coulissant.

4. Appareil selon la revendication 1, dans lequel l'appareil (22) de compensation de couple de fluctuation comprend une came (31) de compensation de couple montée sur l'arbre d'entrée (20) de l'appareil de positionnement repéré d'organe de coupe, un toucheau de came (32) maintenu en contact roulant avec une surface de la came (31), un coulisseau (33) supportant le toucheau de came (32) afin qu'il puisse tourner, un guide tubulaire coulissant (34) qui a un fond fermé et qui loge de manière coulissante le coulisseau (33), un organe à ressort (35) logé dans le guide coulissant (34) afin qu'il repousse le coulisseau (33), et un dispositif destiné à transmettre de l'air dans le guide coulissant.
